# EUROPÄISCHE PATENTANMELDUNG

(11) **EP 1 177 875 A1**
(43) Veröffentlichungstag der Anmeldung: **06.02.2002**
(21) Anmeldenummer: 00116183.5
(22) Anmeldetag: 02.08.2000
(51) Int. Cl.: B29C 45/14, B29C 37/00, B44C 1/17

(54) **Verfahren zum Herstellen eines dekorierten Spritzgussformteils**

(71) Anmelder: MZE Engineering GmbH, 26160 Bad Zwischenahn (DE)
(72) Erfinder: Walter, Thomas Dr., DE-26129 Oldenburg (DE); Zaher, Maximilian, 26125 Oldenburg (DE)
(74) Vertreter: von Hellfeld, Axel, Dr. Dipl.-Phys.

(57) **Zusammenfassung**

Ein Verfahren zum Herstellen eines dekorierten Spritzgußformteils sieht vor, daß eine tiefziehfähige Folie (10) mit "Release"-Eigenschaft in einem Spritzgießwerkzeug (16, 18) vor einer Kavität (16a) angeordnet wird. Die farbig dekorierte und gegebenenfalls lackierte Folie (10) wird mit einem Kunststoff derart hinterspritzt, daß die Folie oben aufliegt und leicht abgezogen werden kann.

## Beschreibung

Die Erfindung betrifft ein Verfahren zum Herstellen eines dekorierten Spritzgußformteils.

Es ist im Stand der Technik bekannt, eine PC-Folie (Polycarbonat) zu hinterspritzen, wobei die PC-Folie auf der anderen, nicht hinterspritzten Seite farbig dekoriert ist. Hierzu wird im Stand der Technik eine mit einem Farbdekor kaschierte (PC) Folie in ein Tiefziehwerkzeug eingelegt und unter Erwärmung umgeformt. Das so umgeformte Formteil wird in einem Spritzgießwerkzeug positioniert und mit einem Kunststoff hinterspritzt.

Der dabei verwendete Polycarbonatfilm ist sehr teuer. Das Verfahren ist aufwendig und erfordert eine Reihe von Arbeitsschritten, nämlich insbesondere das Dekorieren, Trocknen, Verformen, und Stanzen der Kanten.

Der Stand der Technik kennt auch das sog. "Film-Insert"-Verfahren, bei dem eine dekorierte, tiefziehfähige PMMA-Folie in ein Spritzgießwerkzeug geführt wird. Die Folie wird durch ein Heizelement auf der Lackseite erwärmt und mit Vakuum in die Kavität des Spritzgießwerkzeuges gezogen und dabei verformt. Sodann wird nach Schließen des Spritzgießwerkzeuges Kunststoffmaterial (ABS) eingespritzt, das sich mit der Folie dauerhaft verbindet. Dieses Verfahren ist auf relativ flache Formteile beschränkt und ebenfalls relativ aufwendig, insbesondere hinsichtlich des apparativen Aufwandes.

Es ist im Stand der Technik auch bekannt, eine farbig dekorierte Polyesterfolie in einem Spritzgießwerkzeug zu positionieren. Die Dekorschicht ist dabei auf der zu hinterspritzenden Seite der Polyesterfolie angeordnet, d. h. auf derjenigen Seite, auf der das Kunststoffmaterial in die Kavität injiziert wird. Nach dem Hinterspritzen wird die Polyesterfolie abgelöst. Dies ist möglich, weil zwischen der Polyesterfolie und dem Farbdekor eine Trennschicht vorgesehen ist. Allerdings hinterläßt die Trennschicht Spuren auf dem so gebildeten Formteil, welches deshalb stellenweise schlecht lackierbar ist.

Der Erfindung liegt die Aufgabe zugrunde, ein Verfahren zum Herstellen eines dekorierten Spritzgußformteils bereitzustellen, das mit möglichst geringem Aufwand hinsichtlich der erforderlichen Vorrichtungen und Arbeitsschritte die Herstellung eines hochwertigen dekorierten Spritzgußformteils ermöglicht.

Zur Lösung dieser Aufgaben schlägt die Erfindung ein Verfahren zum Herstellen eines dekorierten Spritzgußformteils vor, bei dem eine tiefziehfähige Folie mit "Release"-Eigenschaft in einem Spritzgußwerkzeug vor einer Kavität, deren Form der des herzustellenden Formteils entspricht, angeordnet wird, die Folie mit einem Kunststoff hinterspritzt wird, und die Folie vom so erzeugten Formteil entfernt wird, wobei sich die Farbdekorschicht am Formteil haftend von der Folie löst.

Erfindungsgemäß wird also eine Folie mit "Release"-Eigenschaft verwendet. Die "Release"-Technik ist als solche bekannt (z. B. EP 0 573 676 A1). Als flächige Träger mit "Release"-Eigenschaft kommen insbesondere in Betracht bestimmte Papiere und auch Kunststoffolien, die an ihrer Oberfläche so gestaltet bzw. präpariert sind, daß aufgetragene Farbschichten oder Lackschichten in der Art eines "Abpellens" (wie ein Abziehbild) auf ein Substrat übertragbar sind.

Die "Release"-Folie ist tiefziehfähig in dem Sinne, daß sie stark mittels einer Druckdifferenz oder injizierter, heißer Kunststoffmasse verformbar ist. Bevorzugt ist das Material für die Folie PVA (Polyvinylalkohol).

Das auf diese Weise hergestellte, farbig dekorierte Formteil kann anschließend lackiert werden, insbesondere mit einem UV-härtbaren Lack.

Eine bevorzugte Ausgestaltung der Erfindung erspart aber die gesonderte Lackierung. Gemäß dieser Variante der Erfindung ist auf der Folie eine Lackschicht unter der Farbdekorschicht aufgebracht, z. B. mittels der vorstehend erwähnten "Release"-Technik. Im Spritzgießwerkzeug liegt dann die Farbdekorschicht direkt am injizierten Kunststoffmaterial und die Lackschicht darüber, d. h. über der Farbdekorschicht. Die "Release"-Folie kann dann abgezogen werden, so daß die Lackschicht als oberstes auf dem entstehenden Produkt liegt und z. B. mit UV-Strahlung abschließend gehärtet werden kann.

Die Erfindung sieht vor, daß die Folie bevorzugt einen extrem hohen Anteil an Weichmachern enthält. Damit ist es möglich, die Folie sehr stark im Spritzgießwerkzeug zu verformen und es ist weiterhin möglich, die Folie mit relativ großen Stärken einzusetzen, insbesondere mit Stärken von mehr als 50 µm. Es hat sich gezeigt, daß durch Zusatz von Weichmachern die Temperaturbeständigkeit der "Release"-Folie (z. B. PVA) nicht leidet. Bevorzugt werden für das erfindungsgemäße Verfahren Stärken der tiefziehfähigen "Release"-Folie im Bereich von 30 bis 100 µm, insbesondere 60 bis 90 µm. Besonders bevorzugt werden Folienstärken im Bereich von 30 bis 80 µm. Die genannten Folien haben eine Temperaturbeständigkeit von bis zu 400°C.

Gemäß einer bevorzugten Ausgestaltung der Erfindung wird für das Farbdekor eine Farbe gewählt, die im hinterspritzten Kunststoff diffundieren kann. Die Verwendung einer derart diffusionsfähigen Farbe im Dekor hat den Vorteil, daß die Dekoration im Endprodukt eine sehr hohe "Brillanz" aufweist. Dabei ist eine Lackierung nicht mehr unbedingt erforderlich, weil die Farbe im Kunststoff "geschützt" ist.

Andererseits ermöglicht die Erfindung aber, wie oben ausgeführt ist, auch die Verwendung von Lacken als obere Schicht auf dem Endprodukt, wobei die Lacke entweder in das Verfahren derart integriert werden, daß sie unter die Farbdekorschicht auf die Folie aufgebracht werden (z. B. mit "Release"-Technik) oder daß sie gesondert nach Abschluß des Verfahrens auf das dekorierte Produkt in herkömmlicher Weise aufgetragen werden und gegebenenfalls mit Strahlung gehärtet werden.

Bevorzugt werden bei der Erfindung sog. Sol-Gel-Nanolacke eingesetzt.

Nachfolgend werden Einzelheiten der Erfindung mit Blick auf die Zeichnung näher beschrieben. Es zeigt:
- Figur 1: schematisch einen Schnitt durch eine Folie, die mit einem Farbdekor versehen ist;
- Figur 2: schematisch eine Vorrichtung, mit der ein dekoriertes Spritzgußformteil herstellbar ist;
- Figur 3: einen Ausschnitt von Figur 2 in vergrößertem Maßstab, und
- Figur 4: ein fertiges Spritzgußformteil mit Farbdekorschicht und Lackschicht.

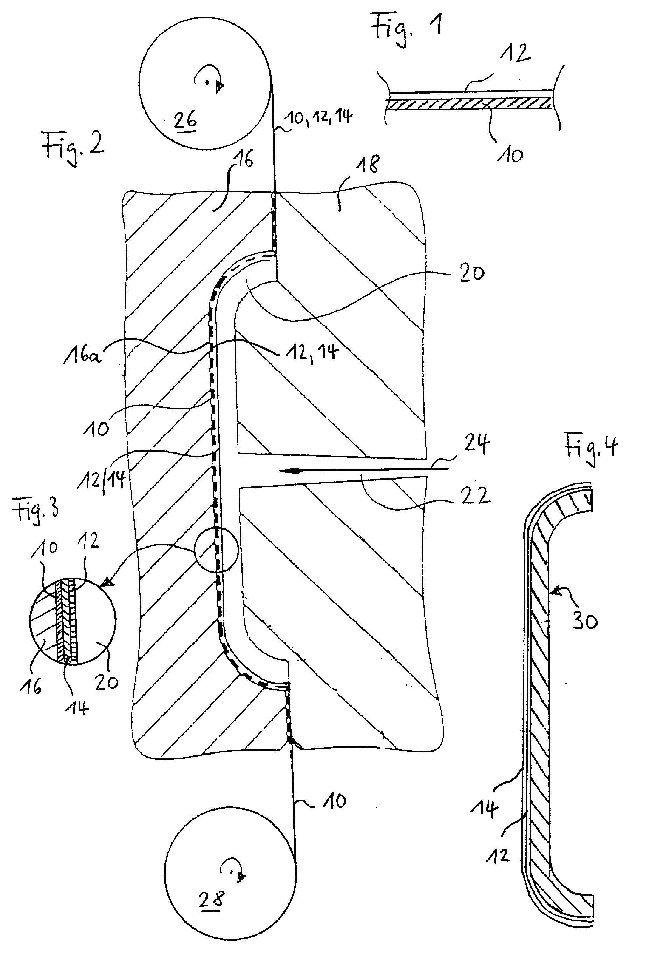

Gemäß Figur 1 ist eine Folie 10 aus z. B. PVA mit einer Farbdekorschicht 12 versehen. Die Farbdekorschicht 12 kann insbesondere in der oben erläuterten "Release"-Technik von einem Träger (nicht gezeigt) auf die Folie 10 übertragen ("kaschiert") werden. Dies ist als solches bekannt.

Die Folie 10 enthält einen sehr hohen Anteil an Weichmachern, ohne ihre Temperaturbeständigkeit bis zu 400°C zu verlieren. Insbesondere hat sich ein Weichmacheranteil (plasticizer) von 5 bis 20 Gewichtsprozenten der Folie als günstig erwiesen, in Abhängigkeit von der Anwendung. Die Stärke der Folie 10 liegt beim Ausführungsbeispiel zwischen 70 und 80 µm.

Die in Figur 1 gezeigte Folie 10, die nur mit einem Farbdekor 12 versehen ist, eignet sich für das nachfolgend beschriebene Verfahren zum Herstellen eines dekorierten Spritzgußformteils.

Allerdings kann dieses Ausführungsbeispiel dahingehend ergänzt werden, daß in Abwandlung von Figur 1 auf die Folie 10 zusätzlich unter die Farbdekorschicht 12 eine Lackschicht aufgetragen wird, z. B. ebenfalls mit der "Release"-Technik. Hierzu werden extrem verformbare UV-Lacke ohne Lösungsmittel verwendet. Insbesondere Sol-Gel-Nanolacke. Nachfolgend wird eine derart gegenüber Figur 1 abgewandelte Variante anhand der Figuren 2 bis 4 näher beschrieben.

Figur 2 zeigt eine Vorrichtung, mit der das Verfahren durchführbar ist. Ein als solches bekanntes Spritzgießwerkzeug weist zwei Spritzgießformen 16, 18 auf, die relativ zueinander bewegbar sind. Zwischen den Formen 16, 18 wird in bekannter Weise ein Hohlraum 20 gebildet, wobei flüssiger Kunststoff durch einen Kanal 22 entsprechend dem Pfeil 44 in den Hohlraum 20 injiziert werden kann.

Die oben beschriebene Folie 10, die mit einem Farbdekor 12 und darauf einem Lack 14 beschichtet ist, wird von einer Rolle 26 abgerollt. Sind die Spritzgießformen 16, 18 voneinander beabstandet (nicht gezeigt), läßt sich die Folie durch das Werkzeug, in Figur 2 von oben nach unten, führen und auf der Unterseite auf einer weiteren Rolle 28 wieder aufrollen. Dabei nimmt die Rolle 28 die Folie 10 auf, von der das Farbdekor 12 und der Lack 14 im Prozeß entfernt worden sind.

Die von der Rolle 26 abgerollte Folie 10 mit dem Farbdekor 12 und dem Lack 14 wird im Spritzgießwerkzeug 16, 18 positioniert. Dabei nehmen die Teile die in Figur 3 näher dargestellte Anordnung ein. Die Folie 10 liegt also beim Spritzgießvorgang direkt an der Kavität 16a der Spritzgießform 16 an. Über der Folie 10 liegt die Lackschicht 14 und über der Lackschicht 14 die Farbdekorschicht 12. Das injizierte heiße Kunststoffmaterial kommt also direkt mit der Farbdekorschicht 12 in Kontakt und verbindet sich damit. Durch den Zusatz von starken Weichmachern in hoher Konzentration im Material der Folie 10 wird erreicht, daß sich die Folie 10 (und das darauf befindliche Farbdekor sowie gegebenenfalls der Lack) auch an starke 3-dimensionale Verformungen der Kavität 16a anpassen können. Die Folie 10 preßt sich gegen die Kavität 16a unter Druck und Temperatur des eingespritzten Kunststoffes an, wobei bevorzugt im Temperaturbereich von 150°C bis 300°C gearbeitet wird.

Aufgrund der "Release"-Eigenschaft der Folie 10 kann diese nach dem Hinterspritzen in einfacher Weise abgelöst und auf die untere Rolle 28 aufgewickelt werden.

Figur 4 zeigt das so entstehende Formteil 30 mit einer Farbdekorschicht 12 und darüber einer Lackschicht 14.

Wird eine geeignete, diffusionsfähige Farbe verwendet, diffundiert diese bei den gegebenen Temperaturen direkt im Kunststoff des Formteils 30.

Wird der vorstehend beschriebene Prozeß mit einer Folie 10 durchgeführt, die nur eine Farbdekorschicht 12 aufweist (entsprechend Figur 1), aber keine Lackschicht, entsteht ein dekoriertes Formteil entsprechend Figur 4, aber ohne Lackschicht 14, so daß danach noch ein Lack aufgetragen werden kann, mit anschließender UV-Härtung.

Die vorstehend beschriebenen Ausführungsbeispiele können dahingehend ergänzt werden, daß über die Farbdekorschicht 12 noch eine Grundfarbschicht (nicht gezeigt) aufgetragen wird. Diese Grundfarbschicht hat also (anders als die Dekorschicht) eine einzige Farbe, die flächendeckend über das gesamte Produkt letztlich aufgebracht wird. Mit dieser Grundfarbschicht kann dann der Kunststoff flächendeckend abgedeckt werden, so daß die darüberliegende Farbdekorschicht besser zur Wirkung kommt. Beim Ausführungsbeispiel gemäß Figur 3 läge also die Grundfarbschicht rechts über der Farbdekorschicht 12, so daß sie beim Spritzgießen direkt auf dem Kunststoff angeordnet wird.

## Patentansprüche

1. Verfahren zum Herstellen eines dekorierten Spritzgußformteils (30), bei dem
eine tiefziehfähige Folie (10) mit "Release"-Eigenschaft in einem Spritzgußwerkzeug (16, 18) vor einer Kavität (16a), deren Form der des herzustellenden Formteils entspricht, angeordnet wird,
die Folie (10) mit einem Kunststoff hinterspritzt wird, und
das so erzeugte Formteil und die Folie (10) voneinander entfernt werden, wobei sich die Farbdekorschicht (12) am Formteil haftend von der Folie (10) löst.

2. Verfahren nach Anspruch 1, **dadurch gekennzeichnet, daß** auf der Folie (10) eine Lackschicht (14) unter der Farbdekorschicht (12) aufgebracht wird, die sich mit der Farbdekorschicht von der Folie (10) löst.

3. Verfahren nach einem der Ansprüche 1 oder 2, **dadurch gekennzeichnet, daß** die Folie (10) hohe Anteile an Weichmacher aufweist.

4. Verfahren nach einem der vorhergehenden Ansprüche, **dadurch gekennzeichnet, daß** die Folie (10) aus PVA besteht.
